Europäisches Patentamt

European Patent Office

Office européen des brevets

(11) Publication number: **0 348 538**
**A1**

# EUROPEAN PATENT APPLICATION

(21) Application number: 88110234.7

(22) Date of filing: 27.06.88

(51) Int. Cl.⁴: **G02B 5/20 , F21S 11/00 ,
E06B 9/24**

(43) Date of publication of application:
**03.01.90 Bulletin 90/01**

(84) Designated Contracting States:
**AT BE CH DE ES FR GB GR IT LI NL SE**

(71) Applicant: Wojcik, Ryszard
Habdzin 72D
05-520 Konstancin-Jeziorna(PL)

Applicant: Wojcik, Anna
Habdzin 72D
05-520 Konstancin-Jeziorna(PL)

(72) Inventor: Wojcik, Ryszard
Habdzin 72D
05-520 Konstancin-Jeziorna(PL)
Inventor: Wojcik, Anna
Habdzin 72D
05-520 Konstancin-Jeziorna(PL)

(74) Representative: Schrimpf, Robert et al
Cabinet Regimbeau 26, Avenue Kléber
F-75116 Paris(FR)

(54) Method of natural light correction in rooms.

(57) A method of natural light correction indoors, consisting in that window openings and/or skylights are mounted as layer correctors modifying the light so that the spectrum in the range from 500 nanometers to nearby infrared becomes dominant. The area wherethrough the light is non-modified makes up at least 2.1 % of the total area of window openings and/or skylights. As correctors, layers of different state of aggregation are used.

EP 0 348 538 A1

# METHOD OF NATURAL LIGHT CORRECTION IN ROOMS

The subject of this present invention is a method of natural light correction in the rooms where there are living organisms, particularly animals, at high concentration in a relatively small area. This method could be used for example in breeding farm animals and be of particular significance in industrial poultry breeding.

The role of light is of very essential importance not only for the rest of animals or for the time of feeding, but also for sexual maturing and egg laying capacity. This problem is of serious interest of many world firms engaged in animal husbandry as well as of many research in university centres.

However, the modifications of lighting programmes developed until now and involving light time lengths and intensities have not become commonly employed.

Poultry is extremely sensitive to these problems as evidenced by hens reacting even to as low light intensities as below 1 lux.

It is common knowledge that letting in more intensive light to a poultry house causes the occurrence of s far-reaching psychosomatic changes that pterophagy occurs and, even, to such a catastrophic phenomenon as cannibalism.

Thus, natural light is eliminated in present practice and various controlled lights are used instead and emitted by resistance lamps and rarer fluoroscent lamps within appropriate time intervals.

The many solutions to that problem can be examplified by a method of lighting rooms for, in this particular case, broiler keeping, as presented in Polish Patent Specification No. 132.570. It involves employing light sources in the form of low-power fluorescent tubes or a number of miniature incandescent lamps located at a height of 10-20 cm on the circuits of hoppers and drinking troughs.

It has turned out, however, that unlimited natural light can be let into the rooms where there are living organisms, even as light-sensitive as hens and turkeys, if allowance is made for proper correction involving shifting the spectrum in the desived direction. The modulation of the photon medium, being light in actual fact, reduces to the dominant role of the spectrum from 500 nanometers to near infrared. In other words, the above mentioned problems are solved by a method of natural light correction indoors, consisting in that window openings and/or skylights are mounted as layer correctors modulating the light so as the spectrum in the range from 500 nanometers to near by infrared becomes dominant. The area wherethrough the light is non-modulated makes up at leat 2.1 % of the total area of window openings and/or skylights. As correctors, layers of different state of aggregation are used.

For the purpose of attaining proper effects in agreement with this present invention, layers, e.g. coating, sheets, acting as color-filter and eliminating incorrect spectra and simultaneously interferring electromagnetic waves should be used as natural light correctors. These correctors are laid out in window openings and/or skylights.

The area of window openings and/or skylights through which unmodulated natural electromagnetic rays pass inside amounts to at least 2.1 per cent of the total area of window openings and/or skylights. Layers of various states of aggregation and, thus, media in solid, liquid and gaseous forms and in mixed combinations can be used as correctors as provided for by this present invention.

Thanks to the application of such light correction interference of electromagnetic waves occurs, which outstandingly favourably affects the metabolims and condition of animals. Thus, letting into rooms the so-modified natural light without any restriction in its intensity which heavily affects by resonance the activity of the physiological processes of living organisms manifests itself objectively by the measured threshold value of the photons of the corrector.

The subject of this present invention is embodied in more detail by the examples which, however, do not limit the scope of its application.

## Example I

Side wall of a building, 80 m long, 12 m wide and 3 m high, are provided with 20 windows glazed with sodium glass in the form of rectangles, 1.5 m long and 1 m wide. Square sheets made of selenium-coloured glass and having an area of 0.38 $m^2$ are attached to these panes using Ceramit glue i.e. about 1/4 of the windows.

5,000 hens accommodated in this building behave entirely quietly and without stress, laying 240 eggs on the average per a statistical hen over a 12-month egg laying period, which means a number of eggs increased by 4.5 per cent and biomass simultaneously increased by 7.9 per cent as compared with a check flock kept by the conventional method.

## Example II

A room, 5 m long, 4 m wide and 2.8 m high, has been provided with a double window glazed with sets of combined panes, one of the sets comprising 0.1 % aqueous solution of methyl orange and 0.05 % carmine, that fills up 2/3 of the glazed area 5 cages, each accommodating 20 mice of the $C_3H$ race have been placed in this room. The mice behave very quietly during their rearing and, in comparison with a check lot, they gain in weight by 9 per cent faster.

The post-mortem has shown all the internal organs to be standard and the separately taken mesenteric and spleen nodes and fragments of femoral nodes confirm good condition when histologically tested.

So the examples shown the excellent results obtained by using filter made of compounds such as selenium, carmine or methyl orange glasses or solutions and whereof area is between about 1/4 and about 2/3 of the transparent surface.

## Claims

1 - A method of natural light correction in rooms, characterised in that layers are fitted as correctors on window openings and/or skylights to modulate light in such a way that a spectrum of a hand ranging from 500 nanometers to near infrared should dominate, the area penetrated by unmodulated light accounting for at least 2.1 per cent of the total area of window openings and/or skylights.

2 - A method as per Claim 1, characterised in that layers of various states of aggregation are used as correctors.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 076 496 (OPTICAL COATING LAB. INC.) <br> * abstract; page 4, paragraphe 2; page 9, line 31 - page 10, line 1; figures 5 - 8 * | 1 | G 02 B 5/20 <br> F 21 S 11/00 <br> E 06 B 9/24 |
| A | DE-C- 966 008 (JENAER GLASWERK) <br> * claims 1, 4; figure * | 1 | |
| A | FR-A-2 491 219 (COMMISSARIAT A L'ENERGIE ATOMIQUE) <br> * page 1, lines 1 - 20; claim 1 * | 1, 2 | |

TECHNICAL FIELDS SEARCHED (Int. Cl.4)

A 01 K <br> E 06 B <br> F 21 S <br> G 02 B

The present search report has been drawn up for all claims

| Place of search | Date of completion of the search | Examiner |
|---|---|---|
| BERLIN | 08-02-1989 | HYLLA W.A. |